# EUROPEAN PATENT APPLICATION

(11) **EP 4 733 489 A1**
(43) Date of publication of application: **29.04.2026**
(21) Application number: 24877196.6
(22) Date of filing: 09.10.2024
(51) Int. Cl.: E02F 9/16, B60S 1/04

(54) **CAB FOR CONSTRUCTION MACHINE**

(30) Priority: 13.10.2023 JP 2023177534
(71) Applicant: KOBELCO CONSTRUCTION MACHINERY CO., LTD., Hiroshima-shi, Hiroshima 731-5161 (JP)
(72) Inventor: YAMAMOTO, Keiji, Hiroshima-shi, Hiroshima 731-5161 (JP); KIDO, Toshiyuki, Hiroshima-shi, Hiroshima 731-5161 (JP)
(74) Representative: TBK
(86) International application number: PCT/JP2024/036080
(87) International publication number: WO 2025/079601

(57) **Abstract**

Provided is a cab (10) of a construction machine with a wiper device inhibited from deteriorating visibility. The cab (10) includes: a cab body (20) including a front wall (21) including a front window pane (22); a wiper (31) that wipes the surface of the front window pane (22); a driving device (32) that swings the wiper (31); and an operation pedal (422) disposed in the cab body (20). The driving device (32) is disposed between the front wall (21) and the operation pedal (422) in the cab front-rear direction such that at least a part of the driving device (32) overlaps the operation pedal (422) when viewed in the cab front-rear direction.

## Description

### Technical Field

The disclosed technology relates to a cab of a construction machine.

### Background Art

Patent Literature 1 discloses a cab of a construction machine, the cab including a front wall including a front window pane, and a wiper device that wipes the surface of the front window pane. The wiper device includes a wiper that swings to wipe the surface of the front window pane, a driving device that swings the wiper, and a box that accommodates the driving device.

The box is manufactured in a lower frame constituting the cab, having a complicated structure therefor. The driving device, if disposed in the cab to simplify the structure, may deteriorate the visibility of an operator in the cab.

### Citation List

### Patent Literature

Patent Literature 1: Japanese Unexamined Patent Publication No. 2008-169649

### Summary of Invention

An object of the technology of the present disclosure is to provide a cab of a construction machine, the cab being capable of inhibiting a driving device for a wiper from deteriorating visibility.

Provided is a cab of a construction machine, including a cab body, a wiper, a driving device, and an operation pedal. The cab body has a cab front-rear direction and has a shape enclosing an internal space. The cab body includes a front wall located on a front side of the internal space in the cab front-rear direction, and the front wall includes a front window pane. The wiper includes a swing shaft supported by a lower part of the front wall, and a wiper body that swings about the swing shaft to wipe a surface of the front window pane. The driving device is disposed in the cab body and swings the wiper body. The operation pedal is disposed in the cab body so as to allow a pedal operation to be applied to the operation pedal. The driving device is disposed between the front wall and the operation pedal in the cab front-rear direction such that at least a part of the driving device overlaps the operation pedal when viewed in the cab front-rear direction.

### Brief Description of Drawings

FIG. 1 is a side view of a hydraulic excavator according to an embodiment of the present invention.
FIG. 2 is a perspective view showing a cab of the hydraulic excavator as viewed from the front.
FIG. 3 is a cross-sectional side view of the inside of the cab as viewed from the left, showing a cross section taken along the line III-III in FIG. 2.
FIG. 4 is a perspective view showing the wiper device of the cab as viewed from the rear.
FIG. 5 is a cross-sectional side view showing the driving device and the first operation pedal of the wiper device as viewed from the left, showing a cross section taken along line V-V in FIG. 2.
FIG. 6 is a rear view of the driving device and the first operation pedal.
FIG. 7 is a perspective view showing the inside of the cab as an operator's line of sight.
FIG. 8 is a cross-sectional side view showing the inside of a cab according to a modification of the embodiment as viewed from the left.

### Detailed Description

Hereinafter will be described exemplary embodiments in detail with reference to the drawings.

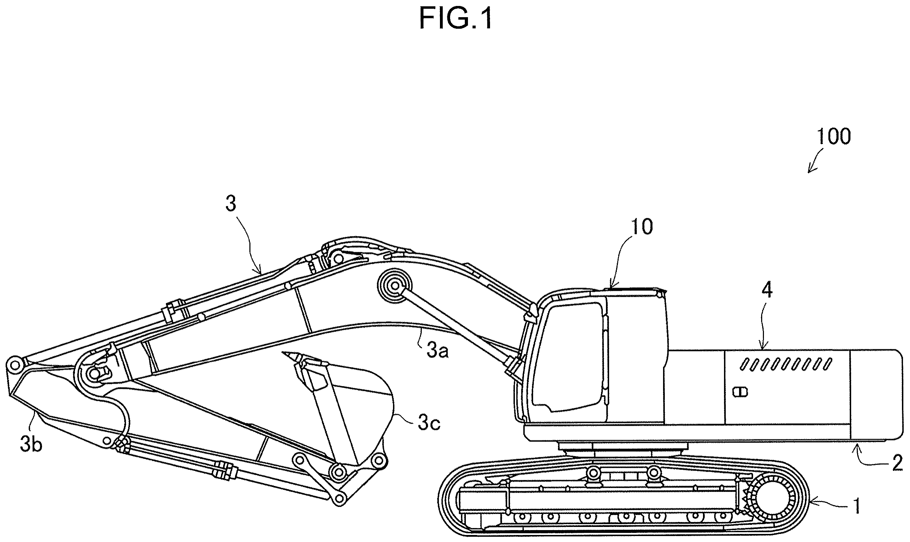

FIG. 1 is a side view of a hydraulic excavator 100 according to the embodiment. The hydraulic excavator 100 mainly performs excavation work, being an example of a construction machine. The hydraulic excavator 100 includes a traveling body 1, a turning body 2, and an attachment 3.

The traveling body 1 includes a pair of crawlers 1a. The turning body 2 is disposed on the traveling body 1, being capable of turning about a vertically extending axis with respect to the traveling body 1. The turning body 2 includes a machine chamber 4 and a cab 10. The turning body 2 has a turning-body front-rear direction and a turning-body left-right direction orthogonal to the turning-body front-rear direction.

The attachment 3 is connected to a front part of the turning body 2, disposed at a center of the turning body 2 in the the-turning-body left-right direction. The attachment 3 is an example of a work device, including a boom 3a, an arm 3b, and a bucket 3c which are arranged in order from a side close to the turning body 2. The machine chamber 4 forms a rear part of the turning body 2. The machine chamber 4 accommodates an engine, which is a power source to drive the attachment 3 and the like, a hydraulic pump, and the like. The cab 10 forms a front part of the turning body 2. The cab 10 is disposed at a position closer to the left side of the turning body 2 in the the-turning-body left-right direction, that is, a position on the left side of the attachment 3.

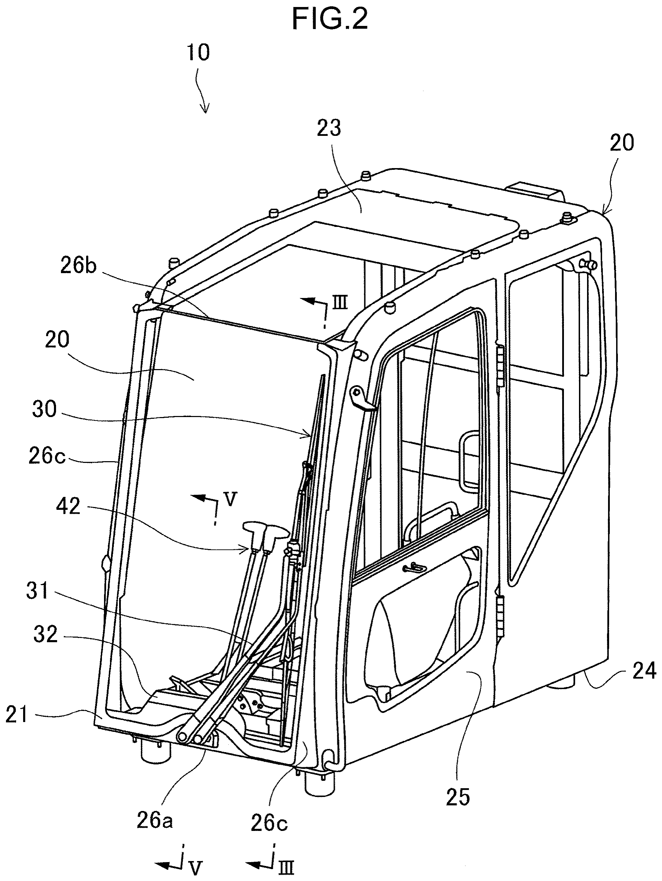

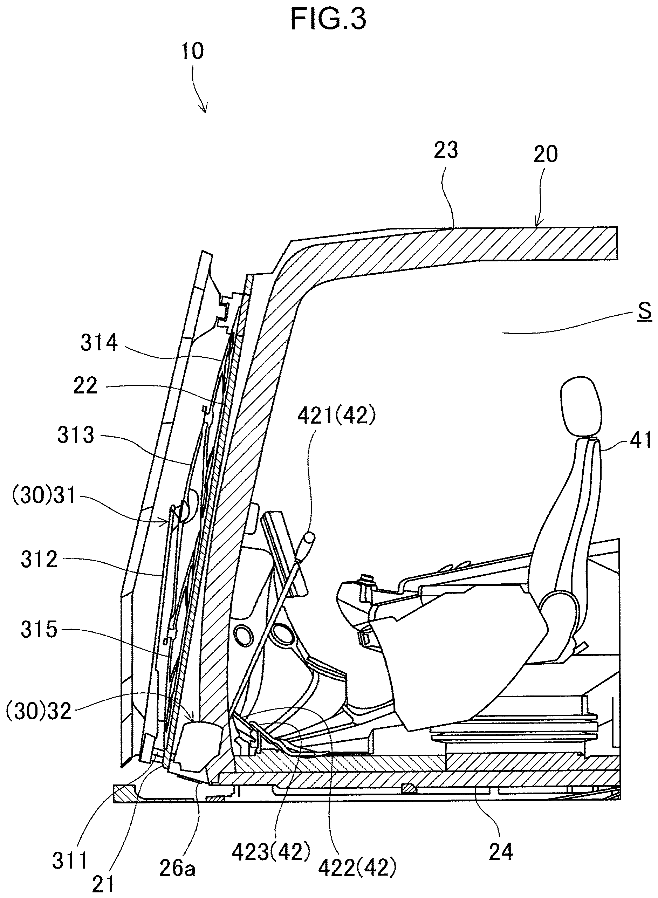

FIG. 2 is a perspective view showing the cab 10 as viewed from the front. FIG. 3 is a cross-sectional side view showing the inside of the cab 10 as viewed from the left. The cab 10 encloses an operator to protect the operator. The cab 10 includes a cab body 20, a wiper device 30, a seat 41, and an operation device 42.

The cab body 20 has a hollow shape enclosing an internal space, specifically, an operation space S for receiving an operator. The cab body 20 is formed in a box shape, specifically, a hollow rectangular body shape. The operation space S is, thus, formed inside the cab body 20. The cab body 20 has a cab front-rear direction and a cab left-right direction orthogonal to the cab front-rear direction. In the present embodiment, the cab body 20 is disposed such that the cab front-rear direction and the cab left-right direction coincide with the turning-body front-rear direction and the turning-body left-right direction, respectively. The cab body 20 includes a front wall 21 located on the front side of the operation space S in the cab front-rear direction, a top wall 23 located on the upper side of the operation space S, a floor 24 located on the lower side of the operation space S, a pair of side walls 25 located on the left and right sides of the operation space S in the left-right direction of the cab, respectively, and a rear wall located on the rear side of the operation space S in the cab front-rear direction.

The front wall 21 includes a front window pane 22. The front window pane 22 is a transparent body disposed to close a window formed in the front wall 21, allowing the front of the cab 10 to be visually recognized from the operation space S through the front window pane 22. The front window pane 22 according to the present embodiment occupies most of the region of the front wall 21. Each of the top wall 23, the pair of side walls 25, and the rear wall also has a window and a window pane that closes the window.

The operation device 42 is disposed in the cab body 20, and an operation is applied to the operation device 42 by an operator in the cab body 20. Specifically, the operation device 42 is disposed on the floor 24. The operation device 42 includes a pair of operation levers 421, a pair of first operation pedals 422, and a pair of second operation pedals 423.

The pair of operation levers 421, the pair of first operation pedals 422, and the pair of second operation pedals 423 are disposed on a front part of the floor 24 in the cab body 20. The seat 41 is disposed on a rear part of the floor 24 in the cab body 20, and allows an operator to sit on the seat 41. The floor 24, thus, supports the seat 41 thereon. The seat 41 is disposed at the center of the floor 24 in the left-right direction of the cab. The pair of operation levers 421, the pair of first operation pedals 422, and the pair of second operation pedals 423 are disposed on the front side of the seat 41, that is, between the front wall 21 and the seat 41.

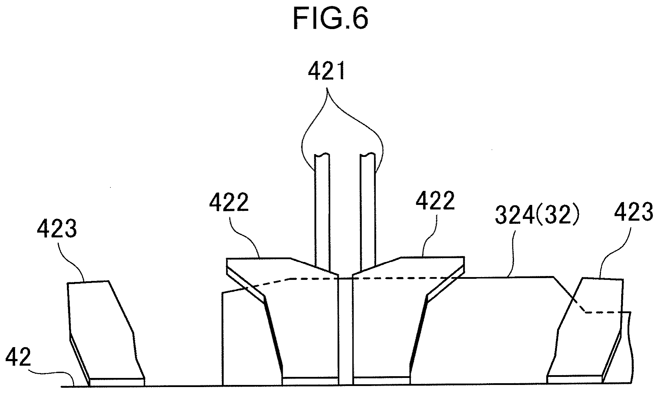

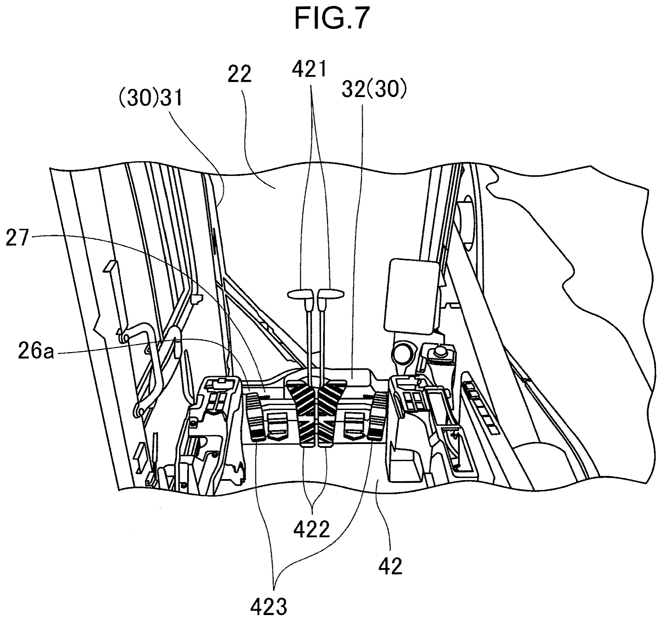

The pair of operation levers 421 form rod shapes extending substantially upward from the upper surface of the floor 24. As shown in FIG. 6 and FIG. 7, the pair of operation levers 421 are aligned in the cab left-right direction at a center position of the floor 24 with respect to the cab left-right direction.

The pair of first operation pedals 422 are disposed in the cab body 20 so as to allow a pedal operation (stepping operation) to be applied to the pair of first operation pedals 422 by an operator. Specifically, the pair of first operation pedals 422 are aligned in the left-right direction of the cab at a center position of the floor 24 in the left-right direction of the cab. Each of the pair of operation levers 421 and each of the pair of first operation pedals 422 are interconnected so as to be interlocked with each other. Specifically, the operation lever 421 on the left side and the first operation pedal 422 on the left side are connected to each other, and applying an operation to one of the operation lever 421 and the first operation pedal 422 causes the crawler 1 a on the left side to be operated. Similarly, the operation lever 421 on the right side and the first operation pedal 422 on the right side are connected to each other, and applying an operation to one of the operation lever 421 and the first operation pedal 422 causes the crawler 1a on the right side to be operated.

The pair of second operation pedals 423 are disposed in the cab body 20 so as to allow a pedal operation (stepping operation) to be applied to the pair of second operation pedals 423 by an operator. Specifically, the pair of second operation pedals 423 are disposed on both sides of the floor 24, specifically, on both outer sides of the pair of first operation pedals 422, in the left-right direction of the cab. Each of the pair of first operation pedals 422 illustrated in the drawing has a tread area larger than a tread area of each of the pair of second operation pedals 423. The top of each of the pair of first operation pedals 422 is located higher than the top of the pair of second operation pedals 423. To the pair of second operation pedals 423 is mainly applied an operation for operating an optional attachment to be attached in place of the bucket 3c. Examples of the optional attachment include a crusher, a magnet, and a grapple.

The wiper device 30 is configured to wipe the surface of the front window pane 22 in order to secure the visibility of an operator in rainy weather or the like. The wiper device 30 is attached to the cab body 20. The wiper device 30 includes a wiper 31 and a driving device 32 that drives the wiper 31. The wiper 31 is disposed outside the front wall 21. The wiper 31 includes a pair of swing shafts 311 and a wiper body. The pair of swing shafts 311 is supported by a lower part of the front wall 21. The wiper body swings about each of the pair of swing shafts 311 to wipe the surface of the front window pane 22. The driving device 32 is disposed in the cab body 20 and swings the wiper 31.

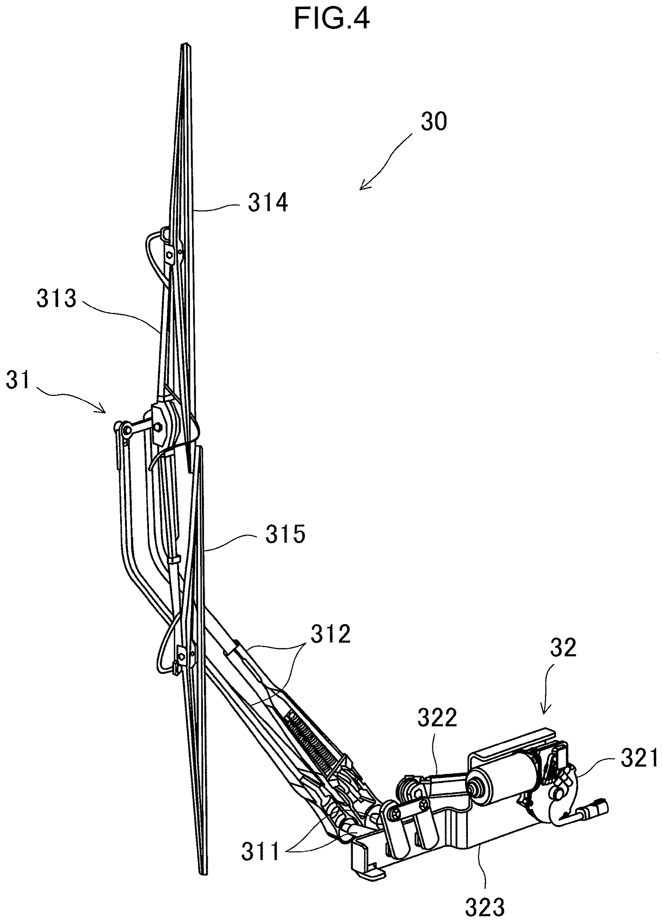

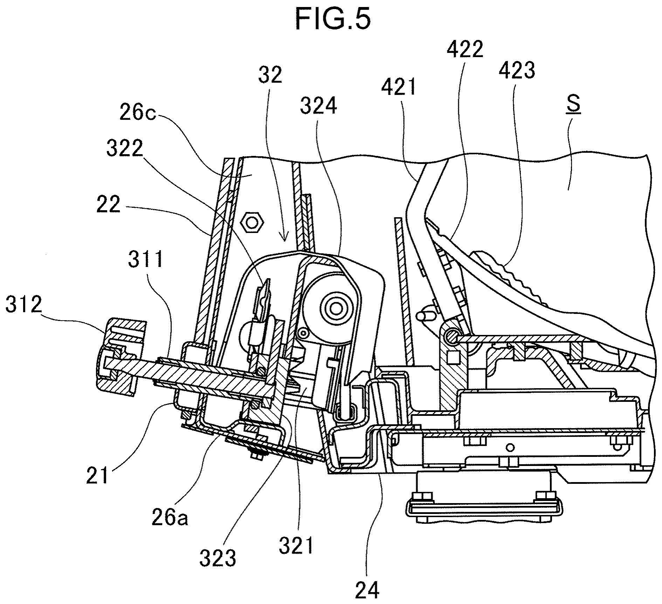

FIG. 4 is a perspective view of the wiper device 30 as viewed from the rear. FIG. 5 is a cross-sectional view showing the driving device 32 and the first operation pedal 422 on the left side when viewed from the left. The wiper body of the wiper 31 includes a pair of arms 312, a holding member 313, and two blades 314 and 315.

Each of the pair of swing shafts 311 is supported by a lower part of the front wall 21 via the driving device 32 so as to be capable of rotational movement about an axis in the cab front-rear direction. The pair of swing shafts 311 are arranged side by side in the cab left-right direction at a center position of the cab in the left-right direction. The pair of swing shafts 311 penetrate the lower part of the front wall 21 in the cab front-rear direction to extend over the inside and the outside of the lower part. The pair of arms 312 have respective lower end parts connected to the pair of swing shafts 311, respectively, and extend substantially parallel to each other from the lower end part. The pair of arms 312 are connected to the swing shafts 311, respectively, so as to swing in the cab left-right direction integrally with the swing shafts 311 with the pair of swing shafts 311 as respective centers. The holding member 313 is connected to respective distal ends of the pair of arms 312 so as to interconnect the distal ends of the pair of arms 312. The two blades 314, 315 are held by the upper and lower ends of the holding member 313, respectively. Each of the two blades 314, 315 includes a part to make close contact with the surface of the front window pane 22, the part formed of rubber. The pair of arms 312, the holding member 313, and the driving device 32 constitute a parallel link mechanism, which allows the holding member 313 and the two blades 314, 315 held by the holding member 313 to perform parallel movement and reciprocating movement in the cab left-right direction caused by the swing of the pair of arms 312 while keeping a posture in which the holding member 313 and the two blades 314, 315 vertically extend.

The driving device 32 includes an electric motor 321, a drive transmission mechanism 322, a frame 323, and a cover 324 shown in FIG. 5. The electric motor 321 has an output shaft, which is connected to the pair of swing shafts 311 via the drive transmission mechanism 322. The drive transmission mechanism 322 transmits the driving force of the electric motor 321 to each of the pair of swing shafts 311 so as to convert the rotational movement of the output shaft of the electric motor 321 into respective rotational movements of the pair of swing shafts 311. The frame 323 is attached to a lower part of the front wall 21 while supporting the electric motor 321 and the drive transmission mechanism 322 and rotatably supporting each of the pair of swing shafts 311. The pair of swing shafts 311 are thus supported by the lower part of the front wall 21 via the frame 323 of the driving device 32. The cover 324 is disposed so as to cover the electric motor 321, the drive transmission mechanism 322, and the frame 323 on the upper side of them. For convenience, illustration of the cover 324 is omitted in FIG. 4.

In the thus configured wiper device 30, the rotation of the output shaft of the electric motor 321 is converted into the swing of the pair of swing shafts 311 and the pair of arms 312 by the drive transmission mechanism 322, which causes the holding member 313 constituting the parallel link mechanism in association with the pair of arms 312 and the blades 314, 315 held by the holding member 313 to reciprocate in the cab left-right direction to wipe the surface of the front window pane 22.

Next will be described the specific arrangement of the driving device 32 in the cab 10 with reference to FIG. 6. FIG. 6 is a rear view of the driving device 32 and the first operation pedal 422.

As shown in FIG. 5, the driving device 32 is disposed between the front wall 21 and the pair of first operation pedals 422 in the cab front-rear direction. More specifically, the driving device 32 is disposed between the front wall 21 and the petals including the pair of first operation pedals 422, the pair of second operation pedals 423 and the pair of operation levers 421, in the cab front-rear direction.

Moreover, as shown in FIG. 6, the driving device 32 is disposed such that at least a part of the driving device 32 overlaps a specific operation pedal when viewed in the cab front-rear direction. Specifically, the driving device 32 includes respective parts overlapping the pair of first operation pedals 422, the pair of operation levers 421, and the right second operation pedal 423 when viewed in the cab front-rear direction. In other words, at least a part of the driving device 32 overlaps the pair of first operation pedals 422, the pair of operation levers 421, and the right second operation pedal 423 in the cab front-rear direction. The top of the driving device 32, which is the top of the cover 324 in the present embodiment, is located at a position lower than the top of each of the pair of first operation pedals 422 and located at a height position substantially equal to the height position of the top of the right second operation pedal 423.

The cab body 20 further includes a lower projection member 26a shown in FIG. 2 and FIG. 3. The lower projection member 26a projects forward beyond a front edge of the floor 24 in the cab front-rear direction, and the front end of the lower projection member 26a is joined with a lower end edge of the front wall 21 and supports the driving device 32 on the lower side of the driving device 32. The driving device 32 is, thus, disposed on the lower projection member 26a.

The cab body 20 further includes an upper projection member 26b and a pair of left and right projection members 26c shown in FIG. 2. The upper projection member 26b projects forward beyond a front edge of the top wall 23 in the cab front-rear direction, and the front end of the upper projection member 26b is joined with an upper end edge of the front wall 21. The pair of left and right projection members 26c project forward in the cab front-rear direction beyond the front edges of the pair of left and right side walls 25, respectively, and respective front ends of the pair of left and right projection members 26c are joined with the left and right end edges of the front wall 21, respectively.

The lower projection member 26a is formed with a window 27. The window 27 is formed to allow the outer side, i.e., lower side, of the lower projection member 26a to be viewed from the operation space S through the window 27. The window 27 is, for example, an opening that penetrates the lower projection member 26a, and a transparent window pane may be disposed so as to close the opening. The window 27 is located outside the driving device 32 in the cab left-right direction. In the present embodiment, as shown in FIG. 7, the window 27 is formed at a position on the left side of the driving device 32. On the other hand, the driving device 32 is disposed on a substantially right half part of the lower projection member 26a in the cab left-right direction, and the attachment 3 is disposed on the right side of the cab 10. The window 27 is, therefore, formed at a position opposite to the attachment 3 across the driving device 32 in the lower projection member 26a.

According to the cab 10 configured as has been described, the driving device 32 of the wiper device 30 can be inhibited from deteriorating the visibility of the operator.

Specifically, the driving device 32 is disposed in the cab body 20 so as to be located between the front wall 21 and the petals including the pair of first operation pedals 422 and the pair of second operation pedals 423 in the cab front-rear direction, and so as to make at least a part of the driving device 32 overlap the specific operation pedal, that is, the pair of first operation pedals 422 and the right second operation pedal 423 in the present embodiment, when viewed in the cab front-rear direction, causing at least a part of the driving device 32 to be hidden behind the specific operation pedal when viewed from an operator sitting on the seat 41 as shown in FIG. 7. In summary, at least a part of the driving device 32 is disposed in an area that is originally a blind area from an operator generated by the specific operation pedal 422. This allows the influence of the driving device 32 on the visual field of an operator to be reduced, that is, inhibits the driving device 32 from deteriorating the visibility of the operator.

Besides, the cab body 20 includes the lower projection member 26a projecting forward in the cab front-rear direction beyond the floor 24 located on the lower side of the operation space S, which is the internal space, and connected to the lower end edge of the front wall 21, the lower projection member 26a expanding the space between the lower part of the front wall 21 and the specific operation pedal 422 to thereby allow a space for the driving device 32 to be easily secured over the lower projection member 26a. This increases the degree of freedom in the arrangement of the driving device 32, thereby facilitating the arrangement of the driving device 32 so as to enlarge the area in which the driving device 32 and the specific operation pedal overlap when viewed in the front-rear direction of the cab. Thus, the driving device 32 is further inhibited from reducing the visibility of an operator.

Furthermore, in the cab body 20, which includes the upper projection member 26b and the pair of left and right projection members 26c in addition to the lower projection member 26a, the entire front wall 21 can be shifted forward in the cab front-rear direction as compared with a case of absence of the projection members 26a to 26c, which allows a space for the driving device 32 to be more easily secured. In addition, the ease of securing the space for the driving device 32 enables the driving device to be disposed without shifting the specific operation pedal rearward in the cab front-rear direction, that is, without reducing the distance between the specific operation pedal and the seat 41. This allows a space around the operator's foot to be properly secured, thereby enabling the operability of the particular operation pedal to be properly kept.

Besides, the window 27 formed in the lower projection member 26a allows an operator to visually recognize the lower part of the cab 10 well through the window 27, regardless of the presence of the lower projection member 26a. In particular, the window 27, which is formed at a position opposite to the attachment 3 across the driving device 32 in the lower projection member 26a, that is, a position on the left side of the driving device 32 in the example, allows the crawler 1a under the cab 10 to be easily viewed from the operation space S, which is the internal space, through the window 27. This enables an operator to perform an operation so as to prevent the crawler 1a from being brought into contact with other objects.

The technique in the present disclosure is not limited to the above-described embodiment, and it is possible to appropriately change, replace, add, omit, and the like as to the embodiment. In addition, it is also possible to combine the components described in the above embodiment to form a new embodiment. In addition, among the components described in the accompanying drawings and the detailed description, not only components essential for solving the problem but also components that are not essential for solving the problem may be included in order to illustrate the technique. Therefore, it should not be recognized that these non-essential components are essential immediately, with the fact that these non-essential components are described in the accompanying drawings and the detailed description.

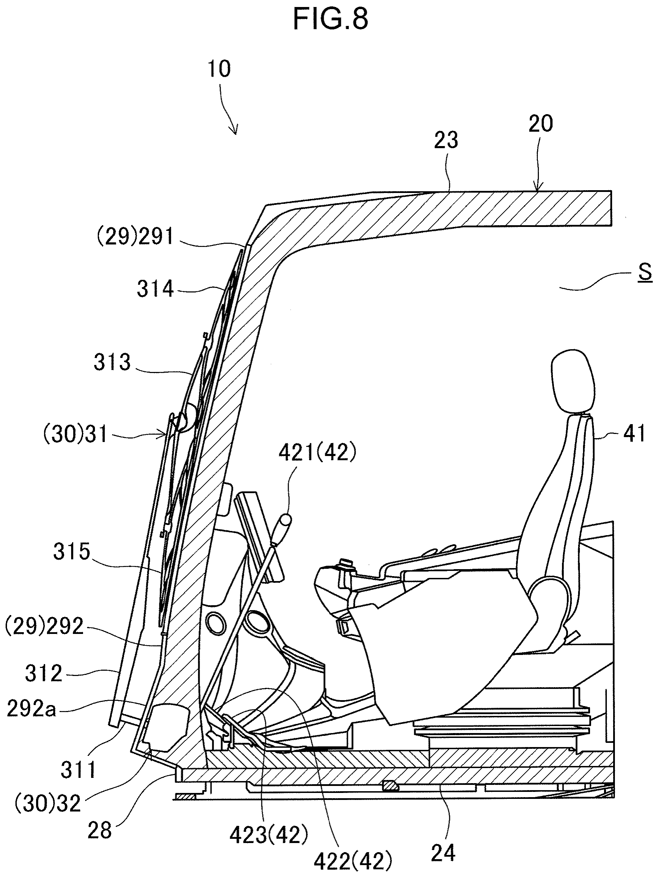

For example, the front wall 21 of the cab 10 is modifiable into various forms. FIG. 8 is a cross-sectional side view showing the inside of a cab 10 according to a modification as viewed from the left. The cab 10 according to the present modification includes a front wall 28 located on the front side of the operation space S similarly to the front wall 21, the front wall 28 having a front window and a front window pane 29 closing the front window. The front window pane 29 has a lower part including a bulging part, which bulges forward in the cab front-rear direction beyond a part other than the bulging part of the front window pane 29 to form a space that accommodates at least a part of the driving device 32. In short, a part of the front window pane 29 bulges forward in the front-rear direction. More specifically, the front window pane 29 is divided into an upper window pane 291 and a lower window pane 292 arranged in the vertical direction, and the lower window pane 292 includes a bulging part 292a which is the bulging part.

The wiper device 30 according to the present modification wipes the surface of the upper window pane 291 out of the front window pane 29. The upper window pane 291 is arranged, for example, so as to be vertically movable, having an area larger than the area of the lower window pane 292.

The bulging part 292a of the lower window pane 292 allows a space for accommodating the driving device 32 to be easily secured. This facilitates the arrangement of the driving device 32 to increase the area in which the driving device 32 and the specific operation pedal overlap when viewed in the cab front-rear direction, thereby allowing the driving device 32 to be inhibited from deteriorating the visibility of an operator.

Besides, the bulging part 292a allows the driving device 32 to be disposed without rearward shift of the specific operation pedal in the cab front-rear direction, thereby allowing favorable operability of the specific operation pedal by the operator to be kept excellent.

The above-described effect can be provided only by the change of the front window pane 29. In particular, in the case of the division of the front window pane 29 into the upper window pane 291 and the lower window pane 292 as in the modification, required is only the lower window pane 292 of the front window pane 29 to be provided with the bulging part 292a, which allows the size of the window in which the bulging part 292a should be formed to be small.

The specific operation pedal, which is an operation pedal overlapping at least a part of the driving device 32 when viewed in the cab front-rear direction, is appropriately selectable. The driving device 32 may be disposed so as to overlap only a single operation pedal. For example, the driving device 32 may be disposed so as to overlap either only one of the pair of first operation pedals 422 or only the pair of second operation pedals 423 when viewed in the cab front-rear direction. Moreover, the pair of second operation pedals 423 may be omitted. The driving device 32, conversely, may be disposed so as to overlap all of the pair of first operation pedals 422 and the pair of second operation pedals 423.

A part or all of the lower projection member 26a, the upper projection member 26b, and the pair of left and right projection members 26c may be omitted.

The window 27 may be omitted as appropriate.

The wiper device according to the present disclosure is not limited to a parallel wiper type. In other words, it is not limited to one including the parallel link mechanism. For example, the wiper body may be configured to swing about a single swing axis to wipe the front window pane surface.

The specific structure of the driving device according to the present disclosure is not limited to the structure of the driving device 32. For example, the driving device does not necessarily need the cover 324.

The technique according to the present disclosure is also applicable to a construction machine other than the hydraulic excavator 100.

As has been described, there is provided a cab of a construction machine a cab of a construction machine, the cab being capable of inhibiting a driving device for a wiper from deteriorating visibility. The cab includes a cab body, a wiper, a driving device, and an operation pedal. The cab body has a cab front-rear direction and has a shape enclosing an internal space. The cab body includes a front wall located on a front side of the internal space in the cab front-rear direction, and the front wall includes a front window pane. The wiper includes a swing shaft supported by a lower part of the front wall, and a wiper body that swings about the swing shaft to wipe a surface of the front window pane. The driving device is disposed in the cab body and swings the wiper body. The operation pedal is disposed in the cab body so as to allow a pedal operation to be applied to the operation pedal. The driving device is disposed between the front wall and the operation pedal in the cab front-rear direction such that at least a part of the driving device overlaps the operation pedal when viewed in the cab front-rear direction.

Since the driving device is disposed between the front wall and the operation pedal in the cab front-rear direction and disposed such that at least a part of the driving device overlaps the operation pedal when viewed in the cab front-rear direction, at least a part of the driving device is hidden behind the operation pedal when viewed from an operator located behind the operation pedal. This reduces the influence of the driving device on the field of view of an operator, thereby enabling the driving device to be inhibited from deteriorating the visibility of the operator.

It is preferable that the cab body further includes a floor located on a lower side of the internal space to support a seat, and a lower projection member projecting forward beyond a front end of the floor in the cab front-rear direction and joined with a lower end edge of the front wall, and the driving device is disposed on the lower projection member. The lower projection member expands a space between the front wall and the operation pedal to easily secure a space for the driving device. This increases a degree of freedom in arrangement of the driving device, facilitating the arrangement of the driving device to increase an area in which at least a part of the driving device and the operation pedal overlap when viewed in the cab front-rear direction. Thus, the driving device is further inhibited from deteriorating the visibility of an operator. Besides, the lower projection member allows the driving device to be disposed without rearward shift of the operation pedal in the cab front-rear direction, that is, without reducing a distance between the operation pedal and the seat. This allows a space around the feet of an operator sitting on the seat to be appropriately secured, thereby enabling the operability of the operation pedal to be appropriately kept.

Preferably, the lower projection member is formed with a window, which is located outside the driving device in the cab left-right direction. The window allows the outside of the cab body to be visually recognized from the internal space through the window at a position deviated from the driving device in the cab left-right direction.

It is preferable that the front window pane has a lower part, which includes a bulging part, and the bulging part bulges forward in the cab front-rear direction beyond a part other than the bulging part in the front window pane to form a space for accommodating at least a part of the driving device. The bulging part allows a space for accommodating the driving device to be easily secured to increase a degree of freedom in arrangement of the driving device, facilitating the arrangement of the driving device to increase an area in which at least a part of the driving device and the operation pedal overlap when viewed in the cab front-rear direction. Thus, the driving device is further inhibited from deteriorating the visibility of an operator. Besides, the bulging part allows the driving device to be disposed without rearward shift of the operation pedal in the cab front-rear direction, enabling the operability of the operation pedal to be appropriately kept. This effect can be provided only by the change of the shape of the front window pane.

The front window pane may be divided into an upper window pane and a lower window pane that are vertically arranged, the lower window pane including the bulging part. This enables the effect to be provided only by the change of only the shape of the lower window pane in the front window pane. Besides, it allows the member in which the bulging part should be formed, namely, the lower window pane, to have a small size to thereby facilitate the formation of the bulging part.

## Claims

1. a cab of a construction machine comprising:
a cab body having a cab front-rear direction, the cab body having a shape enclosing an internal space, the cab body including a front wall located on a front side of the internal space in the cab front-rear direction, the front wall including a front window pane;
a wiper including a swing shaft supported by a lower part of the front wall and a wiper body that swings about the swing shaft to wipe a surface of the front window pane;
a driving device disposed in the cab body and configured to swing the wiper body; and
an operation pedal disposed in the cab body so as to allow a pedal operation to be applied to the operation pedal, wherein
the driving device is disposed between the front wall and the operation pedal in the cab front-rear direction such that at least a part of the driving device overlaps the operation pedal when viewed in the cab front-rear direction.

2. The cab of the construction machine according to claim 1, wherein the cab body further includes a floor located on a rear side of the internal space to support a seat, and a lower projection member projecting forward beyond the floor in the cab front-rear direction and joined with a lower end edge of the front wall, and the driving device is disposed on the lower projection member.

3. The cab of the construction machine according to claim 2, wherein the lower projection member is formed with a window, which is formed at a position outside the driving device in a cab left-right direction orthogonal to the cab front-rear direction.

4. The cab of the construction machine according to claim 1, wherein the front window pane has a lower part, which includes a bulging part, the bulging part bulging forward in the cab front-rear direction beyond a part other than the bulging part of the front window pane to form a space for accommodating at least a part of the driving device.

5. The cab of the construction machine according to claim 4, wherein the front window pane is divided into an upper window pane and a lower window pane which are vertically arranged, the lower window pane including the bulging part.
